(19) Europäisches Patentamt

European Patent Office

Office européen des brevets

(11) **EP 1 008 757 B1**

(12) **EUROPEAN PATENT SPECIFICATION**

(45) Date of publication and mention
of the grant of the patent:
**11.05.2005 Bulletin 2005/19**

(51) Int Cl.7: **F04D 27/02**

(21) Application number: **99309964.7**

(22) Date of filing: **10.12.1999**

(54) **Controlling stall margin in a gas turbine engine during acceleration**

Steuerung des Strömungsablösungsbereiches in eine Gasturbine während der Beschleunigung

Contrôle de la marge de décrochage dans une turbine à gaz pendant l'accélération

(84) Designated Contracting States:
**DE FR GB**

(30) Priority: **11.12.1998 US 209628**

(43) Date of publication of application:
**14.06.2000 Bulletin 2000/24**

(73) Proprietor: **UNITED TECHNOLOGIES CORPORATION**
**Hartford, CT 06101 (US)**

(72) Inventors:
• **Irwin, Craig W.**
**Jupiter, FL 33469 (US)**
• **Khalid, Syed J.**
**Palm Beach Gardens, FL 33410-2623 (US)**

(74) Representative: **Leckey, David Herbert**
**Frank B. Dehn & Co.,**
**European Patent Attorneys,**
**179 Queen Victoria Street**
**London EC4V 4EL (GB)**

(56) References cited:
**US-A- 4 164 033       US-A- 4 991 389**
**US-A- 5 165 845       US-A- 5 385 012**
**US-A- 5 594 665**

## Description

This invention relates to the control of gas turbine engine compressors and more particularly to controlling stall margin in gas turbine engines.

The phenomenon of compressor stall has become an important limiting factor in the operation of gas turbine engines as their performance characteristics have improved. In modern gas turbine engines, upon acceleration or under high altitude and lower speed flight conditions, unstable flow may develop in the compressor which can lead to a stall with a resultant increase in turbine temperature and mechanical vibration along with a simultaneous reduction in cooling air supplied to the turbine. These conditions describe "compressor stall" and can lead to turbine failure if the compressor stall is not recognized and corrective action not taken. Turbine failure during engine operation can lead to severe engine and aircraft damage.

It is known that during transient engine operation, such as during engine acceleration or deceleration, the thermal characteristics (the temperatures of the gas flow and metals) of the compressor components are not the same as they are during steady-state conditions. During an engine transient condition, there is a heat transfer between the gas flowing through the compressor and the metallic case, blades and stators of the compressor. Heat flows from the metallic case, blades and stators to the gas flowing through the compressor, thus increasing the gas temperature. This results in the temperature of the gas flowing through compressor being higher at the exit end of the compressor than in the front of the compressor for a given speed than the corresponding steady-state temperature. As a result, there is a difference or mismatch in the pressure ratios and thermal characteristics between the front stages of the compressor and the aft stages of the compressor due to heat transfer effects, which adversely affects compressor stability. It is undesirable to have a mismatch of gas flow thermal and pressure characteristics through the compressor stages as it may lead to the aft stages operating at lower corrected speeds as the speed is correlated with the gas flow temperature. The compressor's stability is compromised during the mismatch of gas flow characteristics as the front stages may have a much higher pressure ratio than the aft stages leading to a potential stall condition. For example, during deceleration from high to low power, heat transfer effects from the hot metal parts (case and airfoils) reduces the rate with which the gas flow temperature decreases from the temperature corresponding to the steady-state characteristic. Without heat transfer effects, the gas flow temperature would decrease at a faster rate and reach a lower temperature. The heat transfer effect tends to lower the corrected compressor speed of the rear or aft stages of the compressor. This detracts from the suction capability of the aft stages. In other words, the gas flow experiences a resistance as it flows axially downstream the engine flow path. The forward stages thus get back pressurized and, in turn, the operating line for those forward stages approaches the stall line, decreasing the stall margin.

The thermal characteristics of the engine can be synthesized or calculated using sensed parameters to control the deflection of the stator blades and fuel flow to provide an acceptable level of stall margin during acceleration and subsequent thermal nonequilibrium condition. For example, U.S. Patent 5,165,845, assigned to the present applicant, discloses a control system for modifying engine airflow geometry to increase the compressor stall margin during engine acceleration by synthesizing the thermal enlargement of critical compressor stages. This thermal enlargement provides a measure of the temporary increase in blade-case clearance during acceleration. The change in clearance is used to provide a signal, which in turn increases stator vane deflection during acceleration until the clearance returns to a nominal level.

The above-described prior art method increases stall margin during high power thermal stabilization when tip clearances get large. However, even though prior art methods compensate for stall margin loss due to increased tip clearances, stall margin loss due to mismatch of gas flow characteristics aggravated by heat transfer effects have not been adequately understood and addressed. Other prior art control systems to increase stall margin, due to their reliance on a plurality of flow measurements, are complex to implement and are not robust.

US 5,385,012 discloses a method and means for operating a bleed to counter surge in the compressor of a gas turbine.

An object of the present invention in its preferred embodiment at least is the provision of a measure of thermal destabilization of the compressor of the gas turbine engine due to heat transfer effects.

A further object of the present invention in its preferred embodiment at least is the provision of an improved control of stall margin during engine acceleration.

The present invention is predicated on the fact that during transient engine operation, there is a mismatch of gas flow through the compressor stages, due to heat transfer effects which adversely affect compressor stability. The present invention synthesizes a signal indicative of an adverse heat transfer parameter which is a measure of compressor destabilization. The present invention in its preferred embodiment at least provides corrective action and maintains an adequate compressor stall margin if the compressor's stability is compromised.

The present invention provides a control system in combination with a gas turbine engine, and for use during transient engine conditions, as claimed in claim 1.

According to a preferred embodiment of the present invention, a control system for controlling the compressor stall margin during a transient condition in a gas turbine engine includes means for sensing signals indicative of the gas flow temperature and gas pressure. The control system further includes signal processing means, responsive to sensed signals, for synthesizing and for providing a processed signal indicative of a measure of compressor destabilization due to heat transfer effects. The control system may further includes output means, responsive to the processed signal, to effectuate corrective action to increase compressor stall margin. For example, the output means may include an engine control means which is a part of the control system. The engine control means, in response to the synthesized signal, increases stall margin by either adjusting the compressor variable airflow geometry, fuel flow reduction or by modulating the compressor bleed valve.

In a preferred embodiment, the signal processing means includes means for calculating metal temperatures of the blades and case, means for calculating the derivatives of the metal temperatures which is indicative of the rate of heat transfer, means for combining metal temperature rate with metal mass, and means for normalizing the combined signal with total gas enthalpy for synthesizing a dimensionless heat transfer parameter. The output means increases compressor stall margin by opening a mid-compressor bleed valve to relieve the back pressure of forward stages, or by closing compressor variable vanes or by lowering the fuel flow schedule during re-acceleration which lowers the high pressure compressor operating line and thereby increases the compressor stall margin.

The present invention has utility in that it provides for an improved control system for controlling the stall margin during engine transient conditions especially during an acceleration following a deceleration. The present invention accomplishes the control of the stall margin by synthesizing a measure of compressor destabilization due to heat transfer effects.

A preferred embodiment of the invention will now be described, by way of example only, with reference to the accompanying drawings, in which:

> FIG. 1 is an illustration of a gas turbine engine incorporating the control system of the present invention, and
> FIG. 2 is a block diagram of the signal processing logic that is a part of the control system of FIG. 1.

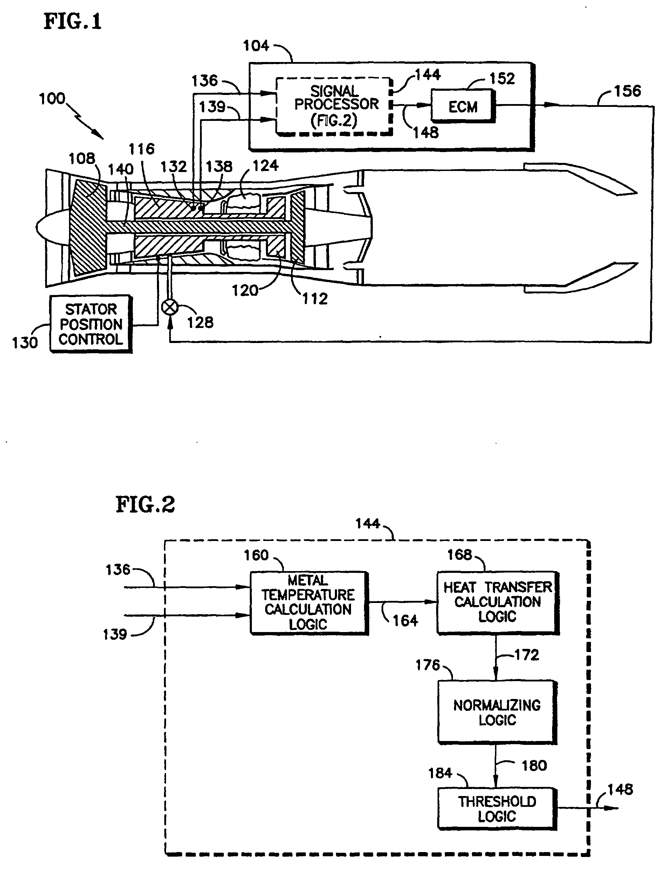

Referring to FIG. 1, there illustrated is an exemplary embodiment of a known, twin-spool turbofan engine 100, together with a corresponding control system 104 having the present invention implemented therein, as described in detail hereinafter. The engine comprises a low pressure compressor 108, connected through a shaft to a low pressure turbine 112; a high pressure compressor 116 connected through a shaft to a high pressure turbine 120; and a burner section 124 disposed between the high pressure compressor 116 and high pressure turbine 120. A bleed valve 128 is disposed between the forward and aft stages of the high pressure compressor to discharge compressor air from the compressor flow path into the fan flow path during certain engine operating conditions. In addition, the engine is assumed to have mechanisms to vary airflow geometry, such as compressor variable vanes. For present purposes, it is sufficient to understand that the deflection of the vanes is varied by a stator position control 130.

A temperature sensor or transducer 132 may preferably be located in the gas flow path at the discharge of the compressor. A pressure sensor or transducer 138 may preferably be also located in the gas flow path at the discharge of the compressor. Placement of the temperature and pressure sensors varies for engine types.

The gas flow temperature on signal line 136 is an input provided to the control system 104 of the present invention. The gas pressure on line 139 also forms an input to the control system 104. The control system 104 of the present invention includes a signal processor 144 for processing the sensed gas flow temperature and pressure. Details of the signal processor 144 are provided hereinafter with respect to the discussion regarding FIG. 2. The output signal of the processor on line 148 is provided to the engine control means 152. The engine control means, in response to the output signal, increases the compressor stall margin by sending a signal on line 156 to either the compressor bleed valve or compressor variable vanes. In FIG. 1, the signal line 156 is shown as being connected to the compressor bleed valve 128. Although not shown, the signal line 156 may be connected to the stator position control 130 which modulates the deflection of the compressor variable vanes to vary airflow geometry.

Illustrated in FIG. 2 is a block diagram of the signal processor 144 of the control system in accordance with an exemplary, preferred embodiment of the present invention. The signal processor 144 has two inputs thereto. The signal on line 136, indicative of the gas flow temperature in the compressor, forms an input to the metal temperature calculation logic block 160. A second input on line 139 indicative of gas pressure also forms an input to the logic block 160. This logic block 160 calculates temperatures that are proportional to actual metal temperatures (stators/blades and case) by applying a first order lag to the gas flow temperature. The amount of lag varies between the case and stators/blades and is a function of metal mass and a function of the gas pressure.

The output of the metal temperature calculation logic block 160 on signal line 164 forms the input to the heat transfer calculation logic block 168. This logic in block 168 calculates a heat transfer parameter by differentiating metal temperatures for the case and stator/blades. Heat transfer is proportional to the derivative of the metal temperatures. Thus, the heat transfer parameter is calculated by taking the product of the metal temperature derivatives and the metal mass for each component (case and stator/blades) and summing the terms.

The output of the heat transfer calculation logic block 168 on signal line 172 forms the input to the normalizing logic block 176. This logic block 176 calculates a dimensionless heat transfer parameter by dividing the output of logic block 168 by the product of gas flow and temperature. This dimensionless heat transfer parameter is a measure of the amount of heat imparted to the gas flow by the surrounding metal and is indicative of compressor thermal destabilization. This logic combines the metal temperature rates with the metal mass and then normalizes the sum to the total gas enthalpy as evidenced by the following equation:

$$\frac{\text{Tcdot } M_C + \text{TBdot } M_B}{(\text{MGdot}) T_3} \qquad \text{(Eq. 1)}$$

where Tcdot is the derivative of the case temperature, $M_c$ is the mass of the case, TBdot is the derivative of the blade temperature, $M_B$ is the mass of the blades, MGdot is the derivative of the mass of the gas, and $T_3$ is the gas flow temperature.

The output of the normalizing logic block 176 on signal 180 indicative of a measure of compressor thermal destabilization due to heat transfer effects, forms an input into the threshold logic block 184. The value on signal line 180 is compared to a threshold value indicative of a healthy compressor which does not have a compromised stability margin as a result of thermal mismatching. The threshold is determined by measuring the high-pressure compressor stability margin of an engine during steady state operation and during thermal transients with progressively increasing severity. The threshold is then the level at which control action is required to maintain adequate stability margin and varies for different engine types.

If the value on signal line 180 is greater than the threshold, then the threshold logic 184 outputs a processed signal on signal line 148. This processed signal on signal line 148 is an input to the engine electronic control unit 152. The engine electronic control unit processes the processed signal to output a command on signal line 156 that triggers the modulation of the compressor bleed valve 128 to increase stall margin. In the alternative, the output command on signal line 156 may trigger the correction of the variable airflow geometry using the stator position control 130 of the compressor to increase stall margin.

The control system of the present invention may be implemented in a variety of ways. As described hereinbefore, the control system of the present invention may utilize digital engine controls. Alternatively, the engine may be implemented in a dedicated microprocessor separate from the engine control. Whenever a microprocessor or the like is used for implementing the invention, such as in a digital engine control, the invention may be implemented in software therein. The invention can be implemented using hard-wired logic or analog circuitry.

Further, the control system of the present invention has been described using particular gas flow temperature and gas pressure input signals from sensors or transducers located at particular aft stage locations in the high-pressure compressor. However, the input signals and locations are purely exemplary; the control system can be operated with other temperature and pressure parameters sensed by transducers located at different locations in the high-pressure compressor. Further, the specific components described and illustrated for carrying out the specific functions of the control system of the present invention are purely exemplary, it is to be understood that other components may be utilized in light of teachings herein. Such components should be obvious to one of ordinary skill in the art. For example, the control system of the present invention has been described with a compressor bleed valve or a variable air flow geometry as the mechanism to increase stall margin. The stall margin may also be increased by modulating fuel flow which decreases the compressor operating line thereby increasing the stall margin.

The calculations and logic illustrated for carrying out the control system of the present invention are purely exemplary. Other logic can be utilized in light of the teachings herein. The signal processing means of the present invention has been described as having the following logic blocks: metal temperature calculation logic, heat transfer calculation logic, normalizing logic and threshold logic. The metal temperature calculation logic has been described to include the application of a first order lag to the gas flow temperature. The amount of lag has been described as a function of metal mass and gas pressure. It is to be understood that the metal temperature can be calculated by applying a lag to parameters other than gas flow temperature such as actual measured metal (case) temperature and the magnitude of the lag can be varied as a function of different parameters such as air flow, compressor speed, and mass flow through compressor.

It will be understood by those skilled in the art that the above-described limits and thresholds are experimentally derived for particular engine types. Other limits and threshold may be utilized in light of the teachings herein.

Although the invention has been shown and described with respect to detailed embodiments thereof, it should be understood by those skilled in the art that various design changes in form and in detail thereof may be made without departing from the scope of the claimed invention.

## Claims

1. A control system in combination with a gas turbine engine (100), and for use during transient engine conditions, the engine (100) having a case formed of a metallic material, a compressor (108,116) operating with a stall margin including rows of blades, and stator vanes both formed of a metallic material, wherein the control system comprises:

   input means (132,138) for sensing and providing sensed signals indicative of a temperature and pressure of a gas flowing through the compressor (108,116); and
   signal processing means (144) which is adapted to respond to the sensed signals, to calculate at least one rate of temperature change of the metallic materials in the compressor, to provide a processed signal indicative of a measure of compressor destabilization due to heat transfer effects, and to provide the processed signal to increase the compressor stall margin if necessary; **characterized in that**
   the signal processing means (144) is adapted to combine the at least one rate of temperature change with the mass of the metallic materials, and normalize the combination to the total gas enthalpy to provide the processed signal.

2. The combination as claimed in Claim 1, wherein the control system further includes output means, responsive to the processed signal, for providing an output signal (152) to initiate corrective action to increase the compressor stall margin.

3. The combination as claimed in Claim 2, wherein the control system further includes an engine control means (130), responsive to the output signal (152), for modifying engine airflow geometry to increase compressor stall margin.

4. The combination as claimed in Claim 2, wherein the control system further includes a compressor bleed valve (128) and an engine control means (130), responsive to the output signal (152), for modulating the compressor bleed valve (128) to increase compressor stall margin.

5. The combination as claimed in any preceding claim, wherein said signal processing means provides a processed signal indicative of a measure of compressor destabilization by applying a first order lag to the gas flow temperature to calculate proportional metal temperatures of the blade and case, calculating derivatives of the metal temperatures indicative of a heat transfer parameter, and calculating a dimensionless heat transfer parameter indicative of compressor destabilization.

6. The combination as claimed in claim 5, wherein the function of applying a first order lag to the gas flow temperature is performed by applying a first order lag to the gas flow temperature at the exhaust of the compressor.

7. The combination as claimed in any preceding claim, wherein the signal processing means for processing the sensed signal further includes comparison means to compare the processed signal to a predetermined threshold to determine if corrective action is required to increase stall margin.

## Patentansprüche

1. Kontrollsystem in Kombination mit einer Gasturbinenmaschine (100) und zur Verwendung während transienter Maschinenzustände, wobei die Maschine (100) ein Gehäuse aus einem Metallmaterial, einem mit einem Stall-Grenzbereich arbeitenden Verdichter (108, 116) mit Reihen von Laufschaufeln, und Statorleitschaufeln, die beide aus einem Metallmaterial geformt sind, wobei das Kontrollsystem aufweist:

   eine Eingabeeinrichtung (132, 138) zum Erfassen und Bereitstellen erfasster Signale, die für eine Temperatur und einen Druck eines durch den Verdichter (108, 116) strömenden Gases indikativ sind; und

   eine Signalverarbeitungseinrichtung (144), die daran angepasst ist, auf die erfassten Signale zu reagieren, mindestens eine Temperaturänderungsgeschwindigkeit der Metallmaterialien in dem Verdichter zu berechnen, ein verarbeitetes Signal bereitzustellen, welches indikativ für ein Maß der Verdichterdestabilisierung in der Folge von Wärmetransfereffekten ist, und das verarbeitete Signal bereitzustellen, um , falls erforderlich, den Verdichterstall-Grenzbereich zu erhöhen,

   **dadurch gekennzeichnet, dass** die Signalverarbeitungseinrichtung (114) daran angepasst ist, die mindestens eine Temperaturänderungsgeschwindigkeit mit der Masse der Metaltmaterialien zu kombinieren und die Kombination mit der Gesamtgasenthalpie zu normieren, um das verarbeitete Signal zu liefern.

2. Kombination nach Anspruch 1, wobei das Kontrollsystem ferner eine Ausgabeeinrichtung ansprechend auf das verarbeitete Signal aufweist, zum Bereitstellen eines Ausgabesignals (152), um eine Korrekturmaßnahme zu starten, um den Verdichterstall-Grenzbereich zu erhöhen.

**3.** Kombination nach Anspruch 2, wobei das Kontrollsystem ferner eine Maschinenkontrolleinrichtung (130) ansprechend auf das Ausgangssignal (152) zum Modifizieren der Maschinen-Luftströmungsgeometrie aufweist, um den Verdichterstall-Grenzbereich zu erhöhen.

**4.** Kombination nach Anspruch 2, wobei das Kontrollsystem ferner ein Verdichterzapfventil (128) und eine Maschinenkontrolleinrichtung (130) ansprechend auf das Ausgabesignal (152) zum Modulieren des Verdichterzapfventils (128) aufweist, um den Verdicherstall-Grenzbereich zu erhöhen.

**5.** Kombination nach einem der vorangehenden Ansprüche, wobei die Signalverarbeitungseinrichtung ein verarbeitetes Signal indikativ für ein Maß der Verdichterdestabilisierung liefert durch Anwenden einer Verzögerung erster Ordnung auf die Gasströmungstemperatur, um proportionale Metalltemperaturen der Laufschaufel und des Gehäuses zu berechnen, Berechnen von Ableitungen der Metalltemperaturen indikativ für einen Wärmetransferparameter und Berechnen eines dimensionslosen Wärmetransferparameters indikativ für die Verdichterdestabilisierung.

**6.** Kombination nach Anspruch 5, wobei die Funktion des Anwendens einer Verzögerung erster Ordnung auf die Gasströmungstemperatur durchgeführt wird durch Anwenden einer Verzögerung erster Ordnung auf die Gasströmungstemperatur an dem Abgabebereich des Verdichters.

**7.** Kombination nach einem der vorangehenden Ansprüche, wobei die Signalverarbeitungseinrichtung zum Verarbeiten des erfassten Signals ferner eine Vergleichseinrichtung zum Vergleichen des verarbeiteten Signals mit einem vorbestimmten Schwellenwert aufweist, um zu bestimmen, ob eine Korrekturmaßnahme zum Erhöhen des Stall-Grenzbereiches erforderlich ist.

**Revendications**

**1.** Système de contrôle en combinaison avec un moteur à turbine à gaz (100), et destiné à être utilisé pendant des conditions de fonctionnement transitoires du moteur, le moteur (100) possédant un carter formé d'un matériau métallique, un compresseur (108, 116) fonctionnant avec une marge de décrochage comprenant des rangées d'ailettes, et des aubes de stator formées d'un matériau métallique, dans lequel le système de contrôle comprend :

des moyens d'entrée (132, 138) destinés à capter et à fournir les signaux captés contenant des informations concernant la pression d'un gaz s'écoulant à travers le compresseur (108, 116) ; et

un moyen de traitement de signal (144) qui est adapté pour répondre aux signaux captés, pour calculer au moins une vitesse de changement de température des matériaux métalliques dans le compresseur, pour fournir un signal traité indicatif de la mesure de la déstabilisation du compresseur due aux effets de transfert de chaleur, et pour fournir le signal traité afin d'augmenter la marge de décrochage du compresseur si nécessaire ; **caractérisé en ce que** le moyen de traitement de signal (144) est adapté pour combiner la ou les vitesses de changement de température avec la masse des matériaux métalliques, et pour normaliser la combinaison par rapport à l'enthalpie de gaz totale afin de fournir le signal traité.

**2.** Combinaison selon la revendication 1, dans laquelle le système de contrôle comprend en outre un moyen de sortie, réagissant au signal traité, afin de fournir un signal de sortie (152) permettant de lancer une action corrective afin d'augmenter la marge de décrochage du compresseur.

**3.** Combinaison selon la revendication 2, dans laquelle le système de contrôle comprend en outre un moyen de contrôle de moteur (130), réagissant au signal de sortie (152), afin de modifier la géométrie du flux d'air du moteur de façon à augmenter la marge de décrochage du compresseur.

**4.** Combinaison selon la revendication 2, dans laquelle le système de contrôle comprend en outre un robinet de purge de compresseur (128) et un moyen de contrôle de moteur (130), réagissant au signal de sortie (152), afin de moduler le robinet de purge du compresseur (128) de façon à augmenter la marge de décrochage du compresseur.

**5.** Combinaison selon l'une quelconque des revendications précédentes, dans laquelle ledit moyen de traitement de signal fournit un signal traité indiquant la mesure de la déstabilisation du compresseur en appliquant un décalage de premier ordre à la température du flux de gaz afin de calculer les températures proportionnelles des métaux de l'ailette et du carter, en calculant des dérivées des températures des métaux indiquant un paramètre de transfert de chaleur, et en calculant un paramètre de transfert de chaleur sans dimension indiquant la déstabilisation du compresseur.

**6.** Combinaison selon la revendication 5, dans laquelle la fonction d'application d'un décalage de premier ordre à la température du flux de gaz est effectuée en appliquant un décalage de premier ordre à la température du flux de gaz au niveau de l'échappement du compresseur.

7. Combinaison selon l'une quelconque des revendications précédentes, dans laquelle le moyen de traitement de signal destiné à traiter le signal détecté comprend en outre un moyen de comparaison afin de comparer le signal traité avec un seuil prédéterminé de manière à déterminer si une action corrective est nécessaire ou non afin d'augmenter la marge de décrochage.

**FIG.1**

**FIG.2**